# EUROPÄISCHE PATENTSCHRIFT

(11) **EP 3 553 290 B1**
(45) Veröffentlichungstag und Bekanntmachung des Hinweises auf die Patenterteilung: **04.11.2020**
(21) Anmeldenummer: 19166993.6
(22) Anmeldetag: 03.04.2019
(51) Int. Cl.: F01N 3/30, F01N 3/05, F01N 3/28, B01F 5/04

(54) **GAS/GAS-MISCHER ZUM EINLEITEN VON GAS IN DEN ABGASSTROM EINER BRENNKRAFTMASCHINE**
GAS/GAS MIXER FOR INTRODUCING GAS INTO THE WASTE GAS FLOW OF A COMBUSTION ENGINE
MÉLANGEUR GAZ/GAZ PERMETTANT D'INTRODUIRE DU GAZ AU FLUX DE GAZ D'ÉCHAPPEMENT D'UN MOTEUR À COMBUSTION INTERNE

(30) Priorität: 11.04.2018 DE 102018108592
(43) Veröffentlichungstag der Anmeldung: 16.10.2019
(73) Patentinhaber: Eberspächer Exhaust Technology GmbH & Co. KG, 66539 Neunkirchen (DE)
(72) Erfinder: Notter, Manuel, 71409 Schwaikheim (DE); Kurpejovic, Enver, 73230 Kirchheim unter Teck (DE)
(74) Vertreter: Ruttensperger Lachnit Trossin Gomoll

(56) Entgegenhaltungen:
- EP-A1- 2 255 867
- EP-A1- 3 299 598
- WO-A1-2007/115810
- WO-A1-2015/065405
- DE-B3-102015 104 540
- JP-A- 2014 111 912
- JP-U- S 537 403
- US-B1- 6 887 435

## Beschreibung

Die vorliegende Erfindung betrifft einen Gas/Gas-Mischer, mit welchem Gas in den Abgasstrom einer Brennkraftmaschine eingeleitet werden kann.

Zur Verminderung des Schadstoffausstoßes von in Kraftfahrzeugen eingesetzten Brennkraftmaschinen ist es bekannt, in Abgasanlagen Partikelfilter vorzusehen. Um ein allmähliches Zusetzen derartiger Partikelfilter zu verhindern, werden die in den Partikelfiltern sich ansammelnden Partikel in einem Reinigungsprozess bei hoher Temperatur abgebrannt.

Ein Gas/Gas-Mischer gemäß dem Oberbegriff des Anspruchs 1 ist aus der US 6 887 435 B1 bekannt.

Es ist die Aufgabe der vorliegenden Erfindung, einen Gas/Gas-Mischer zum Einleiten von Gas, insbesondere Luft, in den Abgasstrom einer Brennkraftmaschine vorzusehen, welcher eine effiziente und gleichmäßige Durchmischung des einzuleitenden Gases mit dem in einer Abgasanlage geführten Abgasstrom gewährleistet.

Erfindungsgemäß wird diese Aufgabe gelöst durch einen Gas/Gas-Mischer zum Einleiten von Gas, insbesondere Luft, in den Abgasstrom einer Brennkraftmaschine, umfassend einen in Richtung einer Körperlängsachse langgestreckten Mischerkörper, wobei in dem Mischerkörper ein Gaseinleitvolumen ausgebildet ist und in einer das Gaseinleitvolumen umgrenzenden Wandung des Mischerkörpers eine Mehrzahl von Gasdurchtrittsöffnungen vorgesehen ist. Erfindungsgemäß ist der Mischerkörper quer zur Körperlängsachse mit abgeflachtem Querschnittsprofil ausgebildet ist.

Durch das Ausgestalten des Mischerkörpers mit abgeflachtem, also stromlinienförmigem Querschnittsprofil wird einerseits erreicht, dass durch den im Abgasstrom sich erstreckenden Mischerkörper ein vergleichsweise geringer Strömungswiderstand für das Abgas eingeführt wird. Andererseits stellt das Umströmen des Mischerkörpers mit Abgas sicher, dass das aus den Gasdurchtrittsöffnungen in Richtung zum Abgasstrom austretende Gas, also beispielsweise Luft, durch das den Mischerkörper umströmende Abgas mitgeführt wird und sich mit diesem gleichmäßig durchmischt.

Zum Bereitstellen der Stromlinienform und Mindern des durch den Mischerkörper eingeführten Strömungswiderstands ist bei einem erfindungsgemäß aufgebauten Gas/Gas-Mischer eine den Bereich maximaler Breite des Querschnittsprofils repräsentierende Profilquerachse in Richtung einer die Länge des Querschnittsprofils zwischen einer Anströmkante des Mischerkörpers und einer Abströmkante des Mischerkörpers repräsentierenden Profillängsachse bezüglich einer Längenmitte der Profillängsachse in Richtung zur Anströmkante des Mischerkörpers verschoben. Der Mischerkörper weist somit im Querschnitt näherungsweise eine Tropfenform auf.

Dabei liegt ein Verhältnis des Abstandes zwischen der Profilquerachse und einer Längenmitte der Profillängsachse zur Länge der Profillängsachse vorteilhafterweise im Bereich von 0,02 bis 0,05.

Um bei möglichst geringem Strömungswiderstand im Inneren des Mischerkörpers ausreichend Volumen für die Zufuhr des in das Abgas einzuleitenden Gases bereitstellen zu können, wird vorgeschlagen, dass ein Verhältnis zwischen einer maximalen Breite des Querschnittsprofils zu einer Länge des Querschnittsprofils zwischen einer Anströmkante des Mischerkörpers und einer Abströmkante des Mischerkörpers im Bereich von 0,2 bis 0,4 liegt.

Für eine effiziente Einleitung des Gases in den Abgasstrom kann eine Mehrzahl von im Wesentlichen in Richtung der Körperlängsachse sich erstreckenden Reihen von Gasdurchtrittsöffnungen vorgesehen sein.

Bei einer besonders vorteilhaften Ausgestaltung des Gas/Gas-Mischers wird vorgeschlagen, dass in der Wandung des Mischerkörpers im Bereich zwischen einer Anströmkante des Mischerkörpers und einem Bereich maximaler Breite des Querschnittsprofils des Mischerkörpers im Wesentlichen keine Gasdurchtrittsöffnungen vorgesehen sind. Auf diese Art und Weise kann verhindert werden, dass das auf den Mischerkörper zu strömende Abgas durch in Richtung stromaufwärts orientierte Gasdurchtrittsöffnungen in das Gaseinleitvolumen im Inneren des Mischerkörpers eintreten kann. Gleichzeitig wird im Bereich der im in Strömungsrichtung weiter hinten liegenden Bereich des Mischerkörpers angeordneten Gasdurchtrittsöffnungen durch das den Mischerkörper außen umströmende Abgas ein Unterdruck erzeugt, welcher das durch den Mischerkörper hindurch geleitete Gas angesaugt und somit die Einleitung von Gas unterstützt.

Vorzugsweise ist das Gaseinleitvolumen in Richtung der Körperlängsachse durch eine Stirnwand abgeschlossen, so dass ein definierter Austritt von Gas nur im Bereich der Wandung des Mischerkörpers erfolgen kann. Hierzu kann insbesondere vorgesehen sein, dass in der Stirnwand keine Gasdurchtrittsöffnungen vorgesehen sind.

Insbesondere bei einer Abgasanlage, bei welcher auf einen Gas/Gas-Mischer ein einziger Partikelfilter folgt, kann für eine möglichst gleichmäßige Verteilung des in das Abgas eingeleiteten Gases vorgesehen sein, dass der Mischerkörper bezüglich einer von einer Anströmkante zu einer Abströmkante sich erstreckenden Längsmittenebene im Wesentlichen symmetrisch ausgebildet ist.

Sind stromabwärts eines derartigen Gas/Gas-Mischers mehrere parallel gespeiste Partikelfilter vorgesehen, so kann es für eine definiert herbeizuführende ungleichmäßige Beaufschlagung derselben mit Abgas vorteilhaft sein, wenn der Mischerkörper bezüglich einer von einer Anströmkante zu einer Abströmkante sich erstreckenden Längsmittenebene unsymmetrisch ausgebildet ist.

Dies kann beispielsweise dadurch erreicht werden, dass eine Anzahl der Gasdurchtrittsöffnungen an einer ersten Seite der Wandung des Mischerkörpers bezüglich der Längsmittenebene sich von einer Anzahl der Gasdurchtrittsöffnungen an einer zweiten Seite der Wandung des Mischerkörpers bezüglich der Längsmittenebene unterscheidet. Alternativ oder zusätzlich kann vorgesehen sein, dass eine Profillinie der Wandung des Mischerkörpers an einer ersten Seite bezüglich der Längsmittenebene sich von einer Profillinie der Wandung des Mischerkörpers an einer zweiten Seite der Wandung des Mischerkörpers bezüglich der Längsmittenebene unterscheidet. Somit kann der Mischerkörper mit einem an eine Tragfläche bzw. einen Flügel angenäherten Querschnittsprofil ausgebildet sein.

Die Erfindung betrifft ferner eine Abgasanlage für eine Brennkraftmaschine, umfassend an einem Abgasrohr wenigstens einen Gas/Gas-Mischer mit erfindungsgemäßem Aufbau.

Um mit dem im Abgasstrom sich erstreckenden Mischerkörper einen möglichst geringen Strömungswiderstand einzuführen, wird vorgeschlagen, dass der wenigstens eine Gas/Gas-Mischer mit zu einer Abgas-Hauptströmungsrichtung im Wesentlichen orthogonal orientierter Körperlängsachse des Mischerkörpers angeordnet ist, wobei eine Anströmkante des Mischerkörpers im Wesentlichen in Richtung stromaufwärts bezüglich der Abgas-Hauptströmungsrichtung orientiert ist und eine Abströmkante des Mischerkörpers im Wesentlichen in Richtung stromabwärts bezüglich der Abgas-Hauptströmungsrichtung orientiert ist.

Stromabwärts des wenigstens einen Gas/Gas-Mischers kann wenigstens ein Partikelfilter vorgesehen sein.

Bei einer alternativen Ausgestaltung einer Abgasanlage kann stromabwärts des wenigstens einen Gas/Gas-Mischers eine Mehrzahl von Partikelfiltern vorgesehen sein, wobei stromabwärts des den wenigstens einen Gas/Gas-Mischer enthaltenden Abgasrohrs eine Rohraufzweigung vorgesehen sein kann. Bei derartiger Ausgestaltung kann von der Rohraufzweigung zu jedem Partikelfilter ein Aufzweigrohr führen.

Insbesondere dann, wenn bei mehreren vorgesehenen Partikelfiltern eine nicht symmetrische Arbeitsweise, also eine nicht symmetrische Beaufschlagung mit Abgas bzw. in dieses eingeleitetem Gas erreicht werden soll, kann die Längsmittenebene des Mischerkörpers derart positioniert sein, dass beidseits der Längsmittenebene die Rohraufzweigung jeweils wenigstens ein Aufzweigrohr umfasst.

Ferner kann für die Verringerung des Abgasausstoßes stromaufwärts des wenigstens einen Gas/Gas-Mischers eine Katalysatoranordnung, vorzugsweise Dreiwegekatalysator, angeordnet sein.

Um das Abbrennen von Partikeln in einem bzw. mehreren Partikelfiltern zu unterstützen, wird vorgeschlagen, dass das in den Abgasstrom einzuleitende Gas Luft ist.

Die vorliegende Erfindung wird nachfolgend mit Bezug auf die beiliegenden Figuren detailliert beschrieben. Es zeigt:
- Fig. 1: eine Prinzipdarstellung einer Abgasanlage mit zwei einer Katalysatoranordnung nachgeschalteten Partikelfiltern und einem stromaufwärts bezüglich der Partikelfilter angeordneten Gas/Gas-Mischer;
- Fig. 2: eine der Fig. 1 entsprechende Darstellung einer Abgasanlage mit einem einzigen Partikelfilter;
- Fig. 3: einen in einem Abgasrohr angeordneten Gas/Gas-Mischer;
- Fig. 4: eine andere Ansicht des Gas/Gas-Mischers in einem Abgasrohr;
- Fig. 5: eine Seitenansicht eines in einem Abgasrohr sich erstreckenden Gas/Gas-Mischers;
- Fig. 6: eine Ansicht des in Fig. 5 dargestellten Gas/Gas-Mischers in Blickrichtung VI in Fig. 5,
- Fig. 7: eine der Fig. 6 entsprechende Ansicht des Gas/Gas-Mischers in Blickrichtung VII in Fig. 5;
- Fig. 8: eine Ansicht des Gas/Gas-Mischers in Blickrichtung VIII in Fig. 5;
- Fig. 9: eine prinzipartige, der Fig. 8 entsprechende Ansicht einer alternativen Ausgestaltungsart eines Gas/Gas-Mischers.

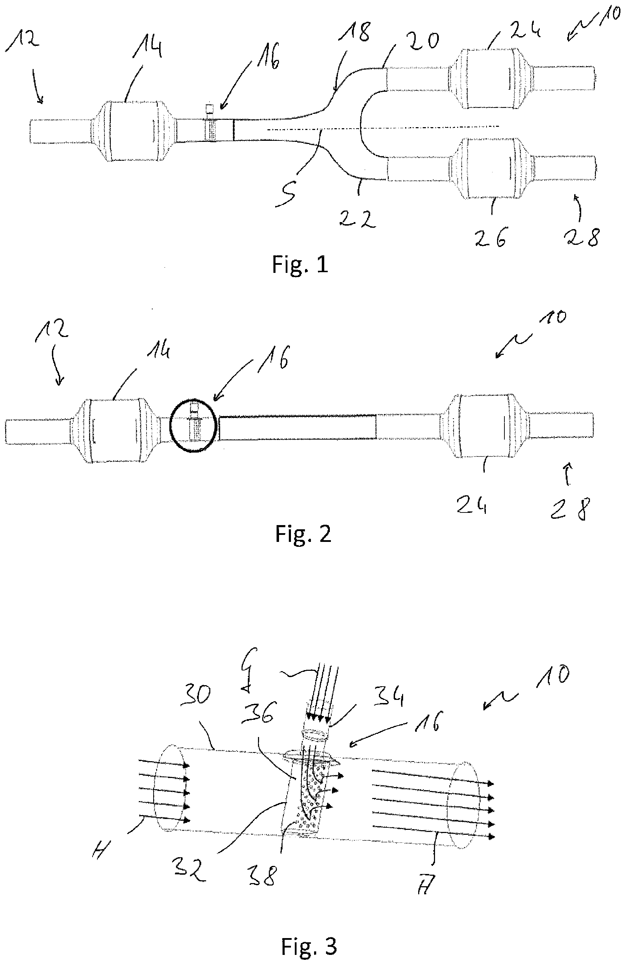

In Fig. 1 ist eine allgemein mit 10 bezeichnete Abgasanlage einer Brennkraftmaschine in einem Kraftfahrzeug dargestellt. In einem stromaufwärtigen Bereich 12 der Abgasanlage 10 ist eine Katalysatoranordnung 14, beispielsweise ein Drei-Wege-Katalysator, angeordnet. Stromabwärts der Katalysatoranordnung 14 ist ein nachfolgend detailliert erläuterter Gas/Gas-Mischer 16 angeordnet, über welchen dem in der Abgasanlage 10 strömenden Abgas ein Gas, beispielsweise Luft, beigemischt werden kann. In Strömungsrichtung auf den Gas/Gas-Mischer folgend umfasst die Abgasanlage 10 eine Rohraufzweigung 18. Von der Rohraufzweigung 18 führen zwei Aufzweigrohre 20, 22 zu jeweiligen Partikelfiltern 24, 26, die auf diese Art und Weise mit Abgas beschickt werden. Das die Partikelfilter 24, 26 durchströmende Abgas kann dann in einem stromabwärtigen Bereich 28 der Abgasanlage 10 beispielsweise nach dem Durchströmen von Schalldämpfern oder weiteren Abgasbehandlungseinheiten zur Umgebung hin abgegeben werden.

Eine alternative Ausgestaltung einer Abgasanlage 10 ist in Fig. 2 dargestellt. Bei dieser Ausgestaltungsart ist folgend auf den Gas/Gas-Mischer 16 nur ein einziger Partikelfilter 24 vorgesehen.

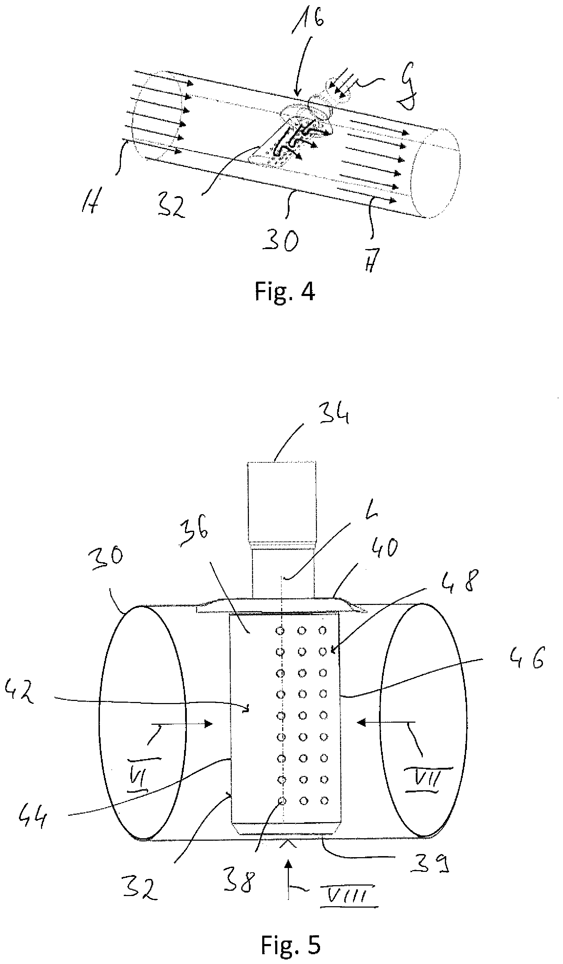

Die Fig. 3 und 4 veranschaulichen die Integration des Gas/Gas-Mischers 16 in ein Abgasrohr 30 der Abgasanlage 10. Der Gas/Gas-Mischer 16 umfasst einen Mischerkörper 32, der im Abgasrohr 30 so positioniert ist, dass dessen Längsachse L sich im Wesentlichen orthogonal zu einer Abgas-Hauptströmungsrichtung H im Abgasrohr 30 im Bereich des Gas/Gas-Mischers erstreckt. Über einen Zuleitstutzen 34 des Gas/Gas-Mischers wird ein Gas G, beispielsweise Luft, in den Mischerkörper 30 eingeleitet und über eine Mehrzahl von in einer Wandung 36 des Mischerkörpers ausgebildeten Gasdurchtrittsöffnungen 38 in den Gasstrom eingeleitet und mit diesem weiter in Richtung zu den stromabwärts geführten Partikelfiltern 24 bzw. 26 geführt. Der Zuleitstutzen 34 kann mit einer Quelle für das einzuleitende Gas G bzw. einer dieses Gas heranführenden Rohrleitung oder dergleichen verbunden sein.

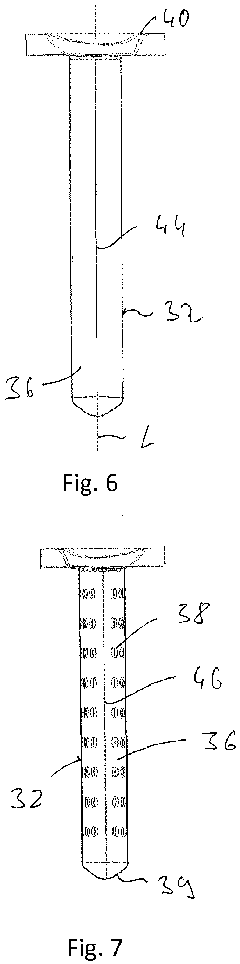

Die Ausgestaltung des Gas/Gas-Mischers 16 wird nachfolgend mit Bezug auf die Fig. 5 bis 8 detaillierter beschrieben.

Der Mischerkörper 32 des Gas/Gas-Mischers 16 umfasst die mit im Wesentlichen zylindrischer Struktur ausgebildete Wandung 36, welche somit mit in Richtung der Körperlängsachse L des Mischerkörpers 32 im Wesentlichen konstantem Querschnittsprofil ausgebildet ist. An einem in Richtung der Körperlängsachse L gelegenen Endbereich ist der Mischerkörper 32 beispielsweise an einer Trägerplatte 40 getragen, an welche auch der Zuleitstutzen 34 anschließt. Über eine zugeordnete Öffnung im Abgasrohr 30 kann der Gas/Gas-Mischer 16 so am Abgasrohr 30 positioniert werden, dass der Mischerkörper 32 sich im Inneren des Abgasrohrs 30 erstreckt und dort von Abgas A umströmbar ist. Die Trägerplatte 40 liegt außen am Abgasrohr 30 an und kann mit diesem beispielsweise durch Verschweißung fest und gasdicht verbunden werden. Die Abmessung des Mischerkörpers 32 kann so auf das Abgasrohr 30 abgestimmt sein, dass der Mischerkörper 32 sich im Wesentlichen über die gesamte Innenabmessung des Abgasrohrs 30 erstreckt. An seinem von der Trägerplatte 40 abgewandten Endbereich ist der Mischerkörper 32 bzw. ein darin gebildetes Gaseinleitvolumen 42 in Richtung der Körperlängsachse L durch eine Stirnwand 39 im Wesentlichen gasdicht abgeschlossen. Das über den Zuleitstutzen 34 zugeleitete Gas tritt in das Gaseinleitvolumen 42 des Mischerkörpers 32 ein und verlässt dieses über die in der Wandung 36 des Mischerkörpers 32 ausgebildeten Gasdurchtrittsöffnungen 38.

Der Mischerkörper 32 ist zum Bereitstellen eines stromlinienförmigen Querschnittsprofils, Querschnitt bezogen auf die Körperlängsachse L des Mischerkörpers, abgeflacht ausgebildet. Dabei erstreckt sich eine Profillängsachse P_{L} zwischen einer Anströmkante 44 und einer Abströmkante 46 des Mischerkörpers 32. Bei in das Abgasrohr 30 integriertem Gas/Gas-Mischer 16 ist der Mischerkörper 32 vorzugsweise derart orientiert, dass die Profillängsachse P_{L} im Wesentlichen in Richtung der Abgas-Hauptströmungsrichtung H orientiert ist. Somit liegt auch eine Längsmittenebene E des Mischerkörpers 32 im Wesentlichen in Abgas-Hauptströmungsrichtung H orientiert.

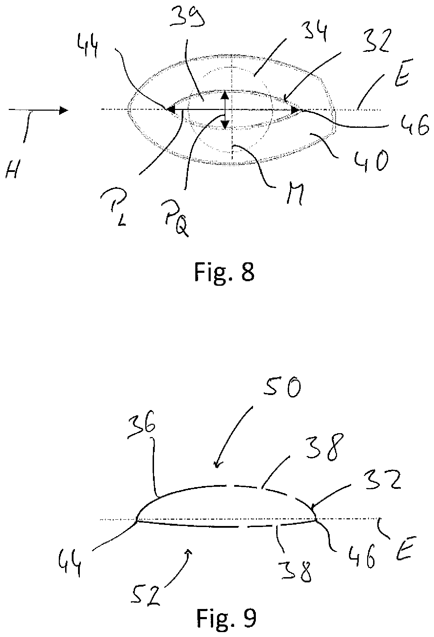

Die Profilquerachse P_{Q}, welche den Bereich maximaler Breite des Mischerkörpers 32 definiert, ist im Wesentlichen quer zur Abgas-Hauptströmungsrichtung H bzw. zur Längsmittenebene E orientiert. Man erkennt in Fig. 8, dass zum Bereitstellen eines an eine Tropfenform angenäherten Querschnittsprofils die Profilquerachse P_{Q} in Richtung der Profillängsachse P_{L} zur Anströmkante 44 hin verschoben ist. Der Abstand zwischen einer auch die Körperlängsachse L enthaltenen bzw. von dieser geschnittenen Mittenlinie M der Profillängsachse P_{L} zur Profilquerachse P_{Q} kann dann, wenn beispielsweise die Länge der Profillängsachse P_{L} zwischen der Anströmkante 44 und der Abströmkante 46 im Bereich von etwa 30 mm liegt, im Bereich von etwa 1 mm liegen. Als vorteilhaft hat sich allgemein für das Verhältnis des Abstandes zwischen der Mittenlinie M und der Profilquerachse P_{Q} von etwa 0,02 bis 0,05 erwiesen. Die Abmessung des Mischerkörpers 32 in Richtung der Profilquerachse P_{Q}, also die Breite des Profilkörpers 32, kann bei einer Länge von etwa 30 mm im Bereich von etwa 9 mm liegen. Hier hat sich für das Verhältnis von Breite zu Länge des Mischerkörpers 32, betrachtet im Querschnitt, ein Bereich von 0,2 bis 0,4 als besonders vorteilhaft für eine effiziente Einleitung des Gases G bei möglichst geringem Strömungswiderstand erwiesen. Es ist darauf hinzuweisen, dass die voranstehend angegebenen Maßangaben bzw. Verhältnisse sich jeweils auf die Außenmaße des Mischerkörpers 32 beziehen können.

Die Gasdurchtrittsöffnungen 38 sind in der Wandung 36 des Mischerkörpers 32 in mehreren im Wesentlichen in Richtung der Körperlängsachse L sich erstreckenden Reihen 48 angeordnet. Dabei zeigt die Fig. 5 deutlich, dass im Bereich zwischen der Anströmkante 44 und dem Bereich maximaler Breite des Mischerkörpers 32 im Wesentlichen keine Gasdurchtrittsöffnungen angeordnet sind. Beispielsweise können die Gasdurchtrittsöffnungen 38 der in Fig. 5 am weitesten links, also am weitesten stromauf positionierten Reihe 48 derart positioniert sein, dass ihre jeweilige Öffnungsmitte näherungsweise im Bereich der Profilquerachse P_{Q}, also im Bereich der maximalen Breite des Mischerkörpers 32 liegt. Die weiteren Reihen 48 bzw. die weiteren Gasdurchtrittsöffnungen 38 folgen dann in der Wandung 36 in deren in Richtung zur Abströmkante 46 sich erstreckendem Umfangsbereich. Mit dieser Anordnung wird erreicht, dass das von stromaufwärts in Richtung Mischerkörper 32 strömende Abgas A im Bereich der Anströmkante 44 umgelenkt und durch die Wandung 36 zunächst zur Seite abgelenkt wird und dann, beginnend in dem Bereich maximaler Breite, auch Bereiche der Umfangswandung 36 umströmt, in welchen Gasdurchtrittsöffnungen 38 vorgesehen sind. Der direkte Eintritt von Abgas in das Gaseinleitvolumen 42 im Inneren des Mischerkörpers 32 ist somit verhindert. Durch das den Mischerkörper 32 bzw. dessen Wandung 36 in Richtung zur Abströmkante 46 dann weiter umströmende Abgas A wird aufgrund des entstehenden Unterdrucks oder/und aufgrund eines im Gaseinleitvolumen 42 grundsätzlich vorhandenen Überdrucks des in das Abgas A einzuleitenden Gases G dieses Gas G durch die Gasdurchtrittsöffnungen 38 hier durch in den Abgasstrom eingeleitet und von diesem weiter in Richtung stromabwärts transportiert. Aufgrund des Umstandes, dass, auch bedingt durch die vergleichsweise lange Ausdehnung des Mischerkörpers 32 in Richtung der Abgas-Hauptströmungsrichtung, eine vergleichsweise große Anzahl an Gasdurchtrittsöffnungen 38 sehr gleichförmig verteilt in der Wandung 36 vorgesehen sein kann, wird eine gleichmäßige Durchmischung des Abgases A mit dem in dieses einzuleitenden Gas gewährleistet. Dies stellt sicher, dass ein oder mehrere stromabwärts folgende Partikelfilter auch gleichmäßig mit dem Gas, beispielsweise Luft, versorgt werden. Dazu ist es weiter vorteilhaft, wenn, wie bei der Ausgestaltungsform der Fig. 3 bis 8 dargestellt, der Mischerkörper 32 bezüglich der Längsmittenebene E im Wesentlichen symmetrisch ausgestaltet ist, was bedeutet, dass sowohl die Wandung 36 bezüglich dieser Längsmittenebene E symmetrisch, insbesondere als spiegelsymmetrisch aufgebaut ist, als auch eine symmetrische Anordnung der Gasdurchtrittsöffnungen 38 an beiden Seiten der Wandung 36 bezüglich der Längsmittenebene E vorgesehen ist. Bei einer Abgasanlage mit beispielsweise zwei parallel gespeisten Partikelfiltern 24, 26, wie diese in Fig. 1 dargestellt ist, kann eine gleichmäßige Zufuhr des über den Gas/Gas-Mischer 16 eingeleiteten Gases G zu den beiden Partikelfiltern 24, 26 dadurch unterstützt werden, dass der Mischerkörper 32 so im Abgasrohr 30 positioniert wird, dass dessen Körperlängsachse L im Wesentlichen orthogonal zu einer Mittenebene bzw. Symmetrieebene S der Rohraufzweigung 18 steht, so wie dies in Fig. 1 dargestellt ist.

Soll definiert eine ungleichmäßige Beschickung der beiden Partikelfilter 24, 26 mit Abgas A bzw. im Abgasstrom transportiertem Gas G erreicht werden, ist es vorteilhaft, den Mischerkörper 32 so am Abgasrohr 30 anzubringen, dass dessen Längsmittenebene E der Symmetrieebene S der Rohraufzweigung 18 entspricht, der Gas/Gas-Mischer 16 also bezüglich der in Fig. 1 dargestellten Positionierung um etwa 90° verdreht positioniert ist. Dabei kann, wie in Fig. 9 in prinzipartiger Weise dargestellt, der Mischerkörper 32 weiterhin so ausgebildet sein, dass bezüglich der Längsmittenebene E, welche sich zwischen der Anströmkante 44 und der Abströmkante 46 erstreckt, die beiden Seiten 50, 52 des Profilkörpers 32 bzw. der Wandung 36 desselben mit unterschiedlicher Profillinie ausgebildet sind. Beispielsweise ist in Fig. 9 die Wandung 36 an der Seite 50 mit deutlich stärkerer Krümmung ausgebildet, als an der Seite 52. Es wird auf diese Art und Weise eine unsymmetrische Umströmung des Mischerkörpers 32 und dementsprechend auch eine ungleichmäßige Einleitung bzw. Verteilung des Gases G im Bereich stromabwärts des Mischerkörpers 32 erreicht. Alternativ oder dies unterstützend kann vorgesehen sein, dass an den beiden Seiten 50, 52 des Mischerkörpers 32 die dort vorgesehenen Gasdurchtrittsöffnungen 38 mit unterschiedlicher Anzahl oder/und unterschiedlicher Größe oder/und unterschiedlicher Positionierung vorgesehen werden. Auf diese Art und Weise kann gewährleistet werden, dass an den beiden Seiten 50, 52 des Mischerkörpers 32 unterschiedliche Mengen des Gases G in den Abgasstrom eingeleitet werden. Bei Aufteilung des Abgasstroms im Bereich der stromabwärts dann folgenden Rohraufzweigung 18 werden dann in unterschiedlichem Ausmaß mit Gas G durchsetzte Teilströme des Abgases A erzeugt und dementsprechend auch unterschiedliche Gaskonzentrationen im Abgas A zu den Partikelfiltern 24, 26 geleitet.

Es sei abschließend darauf hingewiesen, dass, ohne von den Prinzipien der vorliegenden Erfindung abzuweichen, an dem in den Figuren dargestellten und mit Bezug auf die Figuren beschriebenen Gas/Gas-Mischer bzw. der diesen aufweisenden Abgasanlagen verschiedene Variationen vorgenommen werden können. So können beispielsweise die in der Wandung 36 des Mischerkörpers 32 vorgesehenen Gasdurchtrittsöffnungen 38 unterschiedliche Größen aufweisen oder/und in der Wandung 36 mit unterschiedlicher Flächendichte, also mit unterschiedlicher Verteilung, vorgesehen sein. Auch kann der Mischerkörper 32 selbst mit anderem Querschnittsprofil ausgebildet sein. Für eine abgasresistente Ausgestaltung ist der Gas/Gas-Mischer vorzugsweise mit Metallmaterial, beispielsweise Blechmaterial, aufgebaut.

## Patentansprüche

1. Gas/Gas-Mischer zum Einleiten von Gas, insbesondere Luft, in den Abgasstrom einer Brennkraftmaschine, umfassend einen in Richtung einer Körperlängsachse (L) langgestreckten Mischerkörper (32), wobei in dem Mischerkörper (32) ein Gaseinleitvolumen (42) ausgebildet ist und in einer das Gaseinleitvolumen (42) umgrenzenden Wandung (36) des Mischerkörpers (36) eine Mehrzahl von Gasdurchtrittsöffnungen (38) vorgesehen ist, wobei der Mischerkörper (32) quer zur Körperlängsachse (L) mit abgeflachtem Querschnittsprofil ausgebildet ist, wobei eine den Bereich maximaler Breite des Querschnittsprofils repräsentierende Profilquerachse (P_{Q}) in Richtung einer die Länge des Querschnittsprofils zwischen einer Anströmkante (44) des Mischerkörpers (32) und einer Abströmkante (46) des Mischerkörpers (32) repräsentierenden Profillängsachse (P_{L}) bezüglich einer Längenmitte (M) der Profillängsachse (P_{L}) in Richtung zur Anströmkante (44) des Mischerkörpers (32) verschoben ist, **dadurch gekennzeichnet, dass** ein Verhältnis des Abstandes zwischen der Profilquerachse (P_{Q}) und einer Längenmitte (M) der Profillängsachse (P_{L}) zur Länge der Profillängsachse (P_{L}) im Bereich von 0,02 bis 0,05 liegt.

2. Gas/Gas-Mischer nach Anspruch 1, **dadurch gekennzeichnet, dass** ein Verhältnis zwischen einer maximalen Breite des Querschnittsprofils zu einer Länge des Querschnittsprofils zwischen einer Anströmkante (44) des Mischerkörpers (32) und einer Abströmkante (46) des Mischerkörpers (32) im Bereich von 0,2 bis 0,4 liegt.

3. Gas/Gas-Mischer nach Anspruch 1 oder 2, **dadurch gekennzeichnet, dass** eine Mehrzahl von im Wesentlichen in Richtung der Körperlängsachse (L) sich erstreckenden Reihen (48) von Gasdurchtrittsöffnungen (38) vorgesehen ist.

4. Gas/Gas-Mischer nach einem der vorangehenden Ansprüche, **dadurch gekennzeichnet, dass** in der Wandung (36) des Mischerkörpers (32) im Bereich zwischen einer Anströmkante (44) des Mischerkörpers (32) und einem Bereich maximaler Breite des Querschnittsprofils des Mischerkörpers (32) im Wesentlichen keine Gasdurchtrittsöffnungen vorgesehen sind.

5. Gas/Gas-Mischer nach einem der vorangehenden Ansprüche, **dadurch gekennzeichnet, dass** das Gaseinleitvolumen (42) in Richtung der Körperlängsachse (L) durch eine Stirnwand (39) abgeschlossen ist, vorzugsweise wobei in der Stirnwand (39) keine Gasdurchtrittsöffnungen vorgesehen sind.

6. Gas/Gas-Mischer nach einem der vorangehenden Ansprüche, **dadurch gekennzeichnet, dass** der Mischerkörper (32) bezüglich einer von einer Anströmkante (44) zu einer Abströmkante (46) sich erstreckenden Längsmittenebene (E) im Wesentlichen symmetrisch ausgebildet ist.

7. Gas/Gas-Mischer nach einem der Ansprüche 1-5, **dadurch gekennzeichnet, dass** der Mischerkörper (32) bezüglich einer von einer Anströmkante (44) zu einer Abströmkante (46) sich erstreckenden Längsmittenebene (E) unsymmetrisch ausgebildet ist.

8. Gas/Gas-Mischer nach Anspruch 7, **dadurch gekennzeichnet, dass** eine Anzahl der Gasdurchtrittsöffnungen (38) an einer ersten Seite (52) der Wandung (36) des Mischerkörpers (32) bezüglich der Längsmittenebene (E) sich von einer Anzahl der Gasdurchtrittsöffnungen (38) an einer zweiten Seite (52) der Wandung (36) des Mischerkörpers (32) bezüglich der Längsmittenebene (E) unterscheidet.

9. Gas/Gas-Mischer nach Anspruch 7 oder 8, **dadurch gekennzeichnet, dass** eine Profillinie der Wandung (36) des Mischerkörpers (32) an einer ersten Seite (50) bezüglich der Längsmittenebene (E) sich von einer Profillinie der Wandung (36) des Mischerkörpers (32) an einer zweiten Seite (52) der Wandung (36) des Mischerkörpers (32) bezüglich der Längsmittenebene (E) unterscheidet.

10. Abgasanlage für eine Brennkraftmaschine, umfassend an einem Abgasrohr (30) wenigstens einen Gas/Gas-Mischer (16) nach einem der vorangehenden Ansprüche.

11. Abgasanlage nach Anspruch 10, **dadurch gekennzeichnet, dass** der wenigstens eine Gas/Gas-Mischer (16) mit zu einer Abgas-Hauptströmungsrichtung (H) im Wesentlichen orthogonal orientierter Körperlängsachse (L) des Mischerkörpers (32) angeordnet ist, wobei eine Anströmkante (44) des Mischerkörpers (32) im Wesentlichen in Richtung stromaufwärts bezüglich der Abgas-Hauptströmungsrichtung (H) orientiert ist und eine Abströmkante (46) des Mischerkörpers (32) im Wesentlichen in Richtung stromabwärts bezüglich der Abgas-Hauptströmungsrichtung (H) orientiert ist.

12. Abgasanlage nach Anspruch 10 oder 11, **dadurch gekennzeichnet, dass** stromabwärts des wenigstens einen Gas/Gas-Mischers (16) wenigstens ein Partikelfilter (24, 26) vorgesehen ist.

13. Abgasanlage nach Anspruch 12, **dadurch gekennzeichnet, dass** stromabwärts des wenigstens einen Gas/Gas-Mischers (16) eine Mehrzahl von Partikelfiltern (24, 26) vorgesehen ist, wobei stromabwärts des den wenigstens einen Gas/Gas-Mischer (16) enthaltenden Abgasrohrs (30) eine Rohraufzweigung (18) vorgesehen ist und von der Rohraufzweigung (18) zu jedem Partikelfilter ein Aufzweigrohr (20, 22) führt.

14. Abgasanlage nach Anspruch 13, sofern auf Anspruch 6, 7, 8 oder 9 rückbezogen, **dadurch gekennzeichnet, dass** die Längsmittenebene (E) des Mischerkörpers (32) derart positioniert ist, dass beidseits der Längsmittenebene (E) die Rohraufzweigung (18) jeweils wenigstens ein Aufzweigrohr (20, 22) umfasst.

15. Abgasanlage nach einem der Ansprüche 10-14, **dadurch gekennzeichnet, dass** stromaufwärts des wenigstens einen Gas/Gas-Mischers (16) eine Katalysatoranordnung (14), vorzugsweise Dreiwegekatalysator, angeordnet ist,
oder/und
dass das in das Abgas (A) einzuleitende Gas (G) Luft ist.

## Claims

1. Gas/gas mixer for introducing gas, especially air, into the exhaust gas stream of an internal combustion engine, comprising a mixer body (32) that is elongated in the direction of a body longitudinal axis (L), wherein a volume of gas to be introduced (42) is formed in the mixer body (32) and a plurality of gas passage openings (38) are provided in a wall (36) of the mixer body (36), which wall encloses the volume of gas to be introduced (42), wherein the mixer body (32) is configured with a flattened cross-sectional profile transversely to the body longitudinal axis (L), wherein a profile cross-sectional axis (P_{Q}) representing the area of maximum width of the cross-sectional profile is displaced in the direction of a profile longitudinal axis (P_{L}) representing the length of the cross-sectional profile between a leading edge (44) of the mixer body (32) and a trailing edge (46) of the mixer body (32) in relation to a longitudinal center (M) of the profile longitudinal axis (P_{L}) in the direction towards the leading edge (44) of the mixer body (32), **characterized in that** a ratio of the distance between the profile cross-sectional axis (P_{Q}) and a longitudinal center (M) of the profile longitudinal axis (P_{L}) to the length of the profile longitudinal axis (P_{L}) is in the range of 0.02 to 0.05.

2. Gas/gas mixer in accordance with claim 1, **characterized in that** a ratio between a maximum width of the cross-sectional profile to a length of the cross-sectional profile between a leading edge (44) of the mixer body (32) and a trailing edge (46) of the mixer body (32) is in the range of 0.2 to 0.4.

3. Gas/gas mixer in accordance with claim 1 or 2, **characterized in that** a plurality of rows (48) of gas passage openings (38) extending essentially in the direction of the body longitudinal axis (L) are provided.

4. Gas/gas mixer in accordance with one of the preceding claims, **characterized in that** essentially no gas passage openings are provided in the wall (36) of the mixer body (32) in the area between a leading edge (44) of the mixer body (32) and an area of maximum width of the cross-sectional profile of the mixer body (32).

5. Gas/gas mixer in accordance with one of the preceding claims, **characterized in that** the volume of gas to be introduced (42) is closed by means of a front wall (39) in the direction of the body longitudinal axis (L), preferably wherein no gas passage openings are provided in the front wall (39).

6. Gas/gas mixer in accordance with one of the preceding claims, **characterized in that** the mixer body (32) has an essentially symmetrical configuration in relation to a longitudinal central plane (E) extending from a leading edge (44) to a trailing edge (46).

7. Gas/gas mixer in accordance with one of the claims 1-5, **characterized in that** the mixer body (32) has an asymmetrical configuration in relation to a longitudinal central plane (E) extending from a leading edge (44) to a trailing edge (46).

8. Gas/gas mixer in accordance with claim 7, **characterized in that** a number of the gas passage openings (38) on a first side (52) of the wall (36) of the mixer body (32) in relation to the longitudinal central plane (E) is different from a number of gas passage openings (38) on a second side (52) of the wall (36) of the mixer body (32) in relation to the longitudinal central plane (E).

9. Gas/gas mixer in accordance with claim 7 or 8, **characterized in that** a profile line of the wall (36) of the mixer body (32) on a first side (50) in relation to the longitudinal central plane (E) is different from a profile line of the wall (36) of the mixer body (32) on a second side (52) of the wall (36) of the mixer body (32) in relation to the longitudinal central plane (E).

10. Exhaust system for an internal combustion engine, comprising at an exhaust gas pipe (30) at least one gas/gas mixer (16) in accordance with one of the preceding claims.

11. Exhaust system in accordance with claim 10, **characterized in that** the at least one gas/gas mixer (16) is arranged with the body longitudinal axis (L) of the mixer body (32) oriented essentially at right angles to an exhaust gas main direction of flow (H), wherein a leading edge (44) of the mixer body (32) is oriented essentially in the upstream direction in relation to the exhaust gas main direction of flow (H) and a trailing edge (46) of the mixer body (32) is oriented essentially in the downstream direction in relation to the exhaust gas main direction of flow (H).

12. Exhaust system in accordance with claim 10 or 11, **characterized in that** at least one particle filter (24, 26) is provided downstream of the at least one gas/gas mixer (16).

13. Exhaust system in accordance with claim 12, **characterized in that** a plurality of particle filters (24, 26) are provided downstream of the at least one gas/gas mixer (16), wherein a pipe branch (18) is provided downstream of the exhaust gas pipe (30) comprising the at least one gas/gas mixer (16) and a branching pipe (20, 22) leads from the pipe branch (18) to each particle filter.

14. Exhaust system in accordance with claim 13, if referred back to claim 6, 7, 8 or 9, **characterized in that** the longitudinal central plane (E) of the mixer body (32) is positioned such that the pipe branch (18) comprises at least one branching pipe (20, 22) each on both sides of the longitudinal central plane (E).

15. Exhaust system in accordance with one of the claims 10-14, **characterized in that** a catalytic converter device (14), preferably a three-way catalytic converter, is arranged upstream of the at least one gas/gas mixer (16),
or/and
**in that** the gas (G) to be introduced into the exhaust gas (A) is air.

## Revendications

1. Mélangeur gaz/gaz pour l'introduction de gaz, en particulier d'air, dans le flux de gaz d'échappement d'un moteur à combustion interne, comprenant un corps de mélangeur (32) qui est allongé dans la direction d'un axe longitudinal de corps (L), dans lequel un volume de gaz à introduire (42) est formé dans le corps de mélangeur (32) et une pluralité d'ouvertures de passage de gaz (38) sont prévues dans une paroi (36) du corps de mélangeur (36), laquelle paroi entoure le volume de gaz à introduire (42), dans lequel le corps de mélangeur (32) est configuré avec un profil de section transversale aplati transversalement à l'axe longitudinal du corps (L), dans lequel un axe de section transversale de profil (P_{Q}) représentant la zone de largeur maximale du profil de section transversale est déplacé dans la direction d'un axe longitudinal de profil (P_{L}) représentant la longueur de profil de section transversale entre un bord d'attaque (44) du corps de mélange (32) et un bord de fuite (46) du corps de mélange (32) par rapport à un centre longitudinal (M) de l'axe longitudinal de profil (P_{L}) en direction du bord d'attaque (44) du corps de mélange (32), **caractérisé en ce qu'**un rapport entre la distance entre l'axe de section transversale de profil (P_{Q}) et un centre longitudinal (M) de l'axe longitudinal de profil (P_{L}) et la longueur de l'axe longitudinal de profil (P_{L}) est dans la plage de 0,02 à 0,05.

2. Mélangeur de gaz/gaz selon la revendication 1, **caractérisé en ce qu'**un rapport entre une largeur maximale du profil de section transversale et une longueur du profil de section transversale entre un bord d'attaque (44) du corps de mélangeur (32) et un bord de fuite (46) du corps de mélangeur (32) est dans la plage de 0,2 à 0,4.

3. Mélangeur de gaz/gaz selon la revendication 1 ou 2, **caractérisé en ce qu'**une pluralité de rangées (48) d'ouvertures de passage de gaz (38) s'étendant essentiellement dans la direction de l'axe longitudinal de corps (L) sont prévues.

4. Mélangeur de gaz/gaz selon l'une des revendications précédentes, **caractérisé en ce que** dans la paroi (36) du corps de mélangeur (32), dans la zone entre un bord d'attaque (44) du corps de mélangeur (32) et une zone de largeur maximale du profil de section transversale du corps de mélangeur (32), il n'est prévu essentiellement aucune ouverture de passage de gaz.

5. Mélangeur de gaz/gaz selon l'une des revendications précédentes, **caractérisé en ce que** le volume de gaz à introduire (42) est fermé au moyen d'une paroi frontale (39) dans la direction de l'axe longitudinal de corps (L), dans lequel de préférence aucune ouverture de passage de gaz n'est prévue dans la paroi frontale (39).

6. Mélangeur de gaz/gaz selon l'une des revendications précédentes, **caractérisé en ce que** le corps de mélangeur (32) présente une configuration essentiellement symétrique par rapport à un plan central longitudinal (E) s'étendant d'un bord d'attaque (44) à un bord de fuite (46).

7. Mélangeur de gaz/gaz selon l'une des revendications 1-5, **caractérisé en ce que** le corps de mélangeur (32) a une configuration asymétrique par rapport à un plan central longitudinal (E) s'étendant d'un bord d'attaque (44) à un bord de fuite (46).

8. Mélangeur de gaz/gaz selon la revendication 7, **caractérisé en ce qu'**un nombre d'ouvertures de passage de gaz (38) sur un premier côté (52) de la paroi (36) du corps de mélangeur (32) par rapport au plan central longitudinal (E) est différent d'un nombre d'ouvertures de passage de gaz (38) sur un second côté (52) de la paroi (36) du corps de mélangeur (32) par rapport au plan central longitudinal (E).

9. Mélangeur de gaz/gaz selon la revendication 7 ou 8, **caractérisé en ce qu'**une ligne de profil de la paroi (36) du corps de mélangeur (32) sur un premier côté (50) par rapport au plan central longitudinal (E) est différente d'une ligne de profil de la paroi (36) du corps de mélangeur (32) sur un second côté (52) de la paroi (36) du corps de mélangeur (32) par rapport au plan central longitudinal (E).

10. Système d'échappement pour un moteur à combustion interne, comprenant au niveau d'un tuyau de gaz d'échappement (30) au moins un mélangeur de gaz/gaz (16) selon l'une des revendications précédentes.

11. Système d'échappement selon la revendication 10, **caractérisé en ce que** ledit au moins un mélangeur de gaz/gaz (16) est disposé avec l'axe longitudinal (L) du corps de mélangeur (32) orienté essentiellement à angle droit par rapport à une direction principale d'écoulement (H) des gaz d'échappement, dans lequel un bord d'attaque (44) du corps de mélangeur (32) est orienté essentiellement dans la direction amont par rapport à la direction principale d'écoulement (H) des gaz d'échappement et un bord de fuite (46) du corps de mélangeur (32) est orienté essentiellement dans la direction aval par rapport à la direction principale d'écoulement (H) des gaz d'échappement.

12. Système d'échappement selon la revendication 10 ou 11, **caractérisé en ce qu'**au moins un filtre à particules (24, 26) est prévu en aval dudit au moins un mélangeur de gaz/gaz (16).

13. Système d'échappement selon la revendication 12, **caractérisé en ce qu'**une pluralité de filtres à particules (24, 26) sont prévus en aval dudit au moins un mélangeur de gaz/gaz (16), dans lequel une dérivation de tuyau (18) est prévue en aval du tuyau de gaz d'échappement (30) comprenant ledit au moins un mélangeur de gaz/gaz (16) et un tuyau de dérivation (20,22) mène de la dérivation de tuyau (18) à chaque filtre à particules.

14. Système d'échappement selon la revendication 13, s'il est renvoyé à la revendication 6, 7, 8 ou 9, **caractérisé en ce que** le plan central longitudinal (E) du corps de mélangeur (32) est positionné de telle sorte que la dérivation de tuyau (18) comprend au moins un tuyau de dérivation (20, 22) chacun des deux côtés du plan central longitudinal (E).

15. Système d'échappement selon l'une des revendications 10-14, **caractérisé en ce qu'**un dispositif de catalyseur (14), de préférence un catalyseur à trois voies, est disposé en amont dudit au moins un mélangeur de gaz/gaz (16),
ou/et
**en ce que** le gaz (G) à introduire dans le gaz d'échappement (A) est de l'air.
